# EUROPEAN PATENT APPLICATION

(11) **EP 4 769 792 A1**
(43) Date of publication of application: **01.07.2026**
(21) Application number: 25830990.5
(22) Date of filing: 03.04.2025
(51) Int. Cl.: H01M 50/502, H01M 50/521, H01M 50/526, H01M 50/503, H01M 50/507, H01M 50/578

(54) **BATTERY CELL**

(30) Priority: 17.06.2024 KR 20240078523
(71) Applicant: LG ENERGY SOLUTION, LTD., Seoul 07335 (KR)
(72) Inventor: Yoon, Doo Han, Daejeon 34122 (KR); Park, Jun Kyu, Daejeon 34122 (KR)
(74) Representative: Plasseraud IP
(86) International application number: PCT/KR2025/004420
(87) International publication number: WO 2025/263765

(57) **Abstract**

Embodiments provide a battery cell. The battery cell includes first and second electrode assemblies each including a first electrode tab and a second electrode tab and a first terminal assembly coupled to each of the first and second electrode assemblies, the first terminal assembly includes a first bus bar coupled to the first electrode tab of each of the first and second electrode assemblies, a first terminal coupled to the first bus bar, and a first housing with a hole penetrated by the first terminal, and the first bus bar is flexible.

## Description

### [Technical Field]

The present disclosure relates to a battery cell. The present application claims the benefit of priority based on Korean Patent Application No. 10-2024-0078523, filed on June 17, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present disclosure is directed to providing a battery cell assembly with improved safety and reliability.

### [Technical Solution]

Embodiments of the present disclosure provide a battery cell. The battery cell includes first and second electrode assemblies each including a first electrode tab and a second electrode tab and a first terminal assembly coupled to each of the first and second electrode assemblies, the first terminal assembly includes a first bus bar coupled to the first electrode tab of each of the first and second electrode assemblies, a first terminal coupled to the first bus bar, and a first housing with a hole penetrated by the first terminal, and the first bus bar is flexible.

The first bus bar may include a plurality of metal layers.

A thickness of each of the plurality of metal layers may be in a range of 0.1 mm to 0.4 mm.

Each of the plurality of metal layers may include aluminum.

The first bus bar may have a corrugated structure.

The first bus bar may include a portion having a Z-shape.

The battery cell may further include a second terminal assembly coupled to each of the first and second electrode assemblies and spaced apart from the first terminal assembly with the first and second electrode assemblies therebetween, the second terminal assembly may include a second bus bar coupled to the second electrode tab of each of the first and second electrode assemblies, a second terminal coupled to the second bus bar, and a second housing with a hole penetrated by the second terminal, and the second bus bar may be flexible.

The second bus bar may include a plurality of metal layers.

A thickness of each of the plurality of metal layers may be in a range of 0.1 mm to 0.4 mm.

Each of the plurality of metal layers may include copper.

The second bus bar may have a corrugated structure.

The second bus bar may include a portion having a Z-shape.

A thickness of the second bus bar may be different from a thickness of the first bus bar.

The thickness of the second bus bar may be less than the thickness of the first bus bar.

### [Advantageous Effects]

A battery cell according to embodiments of the present disclosure may include a flexible bus bar to connect an electrode tab and terminals of an electrode assembly. Therefore, the electrode tab can be prevented from being disconnected due to swelling of the battery cell, and the safety and reliability of the battery cell can be improved.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIGS. 1 and 2 are perspective views of a battery cell according to embodiments.
FIGS. 3 and 4 are exploded perspective views of a battery cell according to embodiments.
FIG. 5 is a cross-sectional view taken along line 1I-1I' of FIG. 1.
FIG. 6 is a flowchart of a manufacturing method of a battery cell according to embodiments.
FIGS. 7 and 8 are cross-sectional views for describing a manufacturing method of a battery cell according to embodiments.
FIG. 9 is a perspective view of a battery cell assembly according to embodiments.
FIG. 10 is a perspective view of a battery pack according to an embodiment of the present disclosure.
FIG. 11 is an exploded perspective view of the battery pack of FIG. 10.
FIG. 12 is a perspective view for describing the battery pack of FIG. 10.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

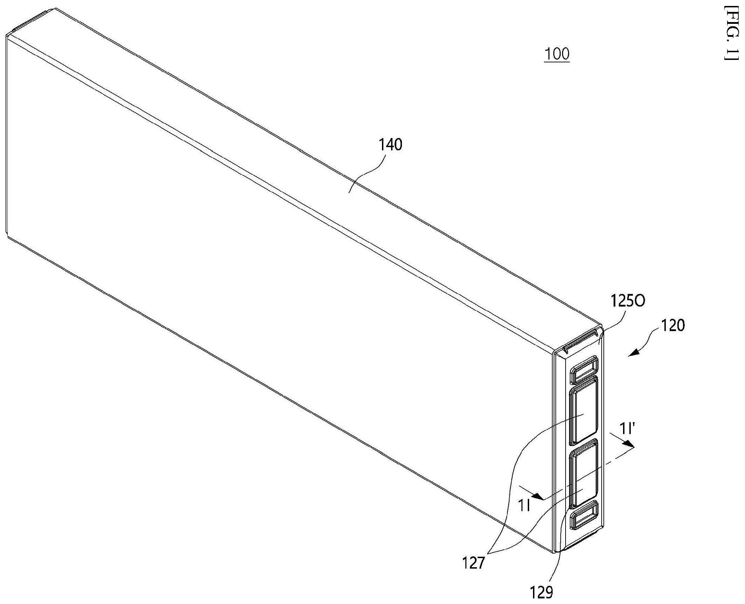

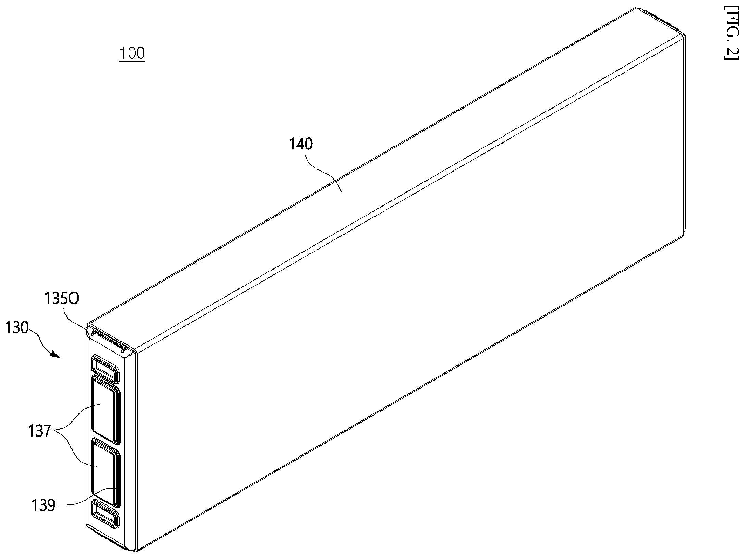

FIGS. 1 and 2 are perspective views of a battery cell 100 according to embodiments. More specifically, FIG. 2 is a perspective view of the battery cell 100 when viewed in a direction different from that of FIG. 1.

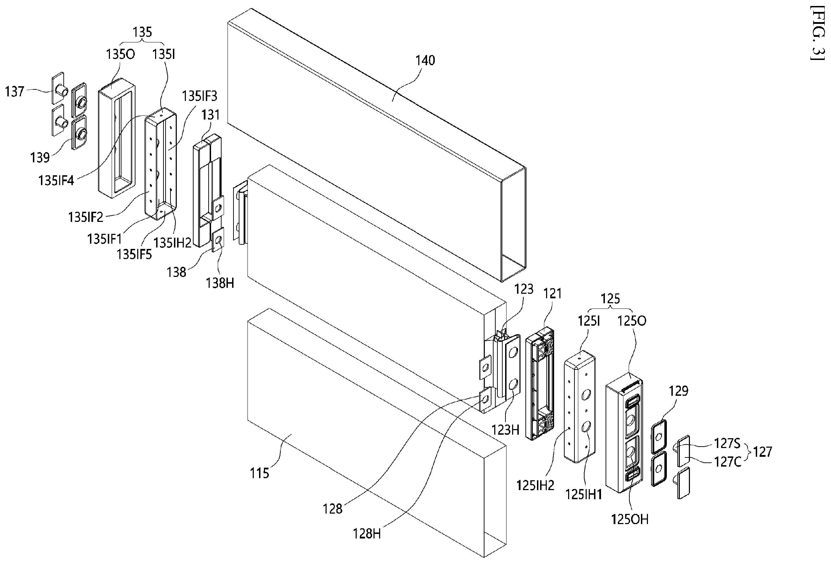

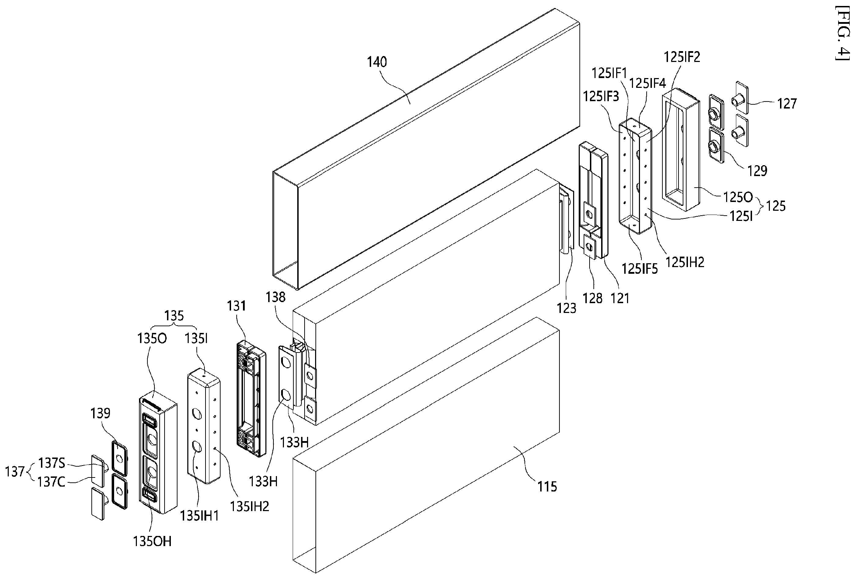

FIGS. 3 and 4 are exploded perspective views of the battery cell 100 according to embodiments. More specifically, FIG. 4 is a perspective view of the battery cell 100 when viewed in a direction different from that of FIG. 3.

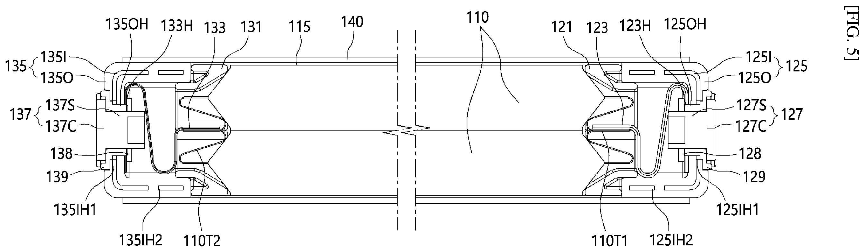

FIG. 5 is a cross-sectional view taken along line 1I-1I' of FIG. 1.

Referring to FIGS. 1 to 5, the battery cell 100 may include electrode assemblies 110, a separator 115, a first terminal assembly 120, a second terminal assembly 130, and a cell case 140. The battery cell 100 may further include an electrolyte in the cell case 140.

Each of the electrode assemblies 110 may be of a jelly-roll type or stack type. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween. The circumference of each of the electrode assemblies 110 may be surrounded by a separator, and thus, a short circuit between the electrode assemblies 110 due to the direct contact with the electrode assemblies 110 may be prevented.

A thickness of a positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of a negative electrode current collector may range from about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+z}Ni_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

Each of the electrode assemblies 110 may include a plurality of first electrode tabs 110T1 and a plurality of second electrode tabs 110T2. The plurality of first electrode tabs 110T1 and the plurality of second electrode tabs 110T2 may have opposite polarities. For example, when each of the plurality of first electrode tabs 110T1 is a positive electrode tab, each of the plurality of second electrode tabs 110T2 may be a negative electrode tab.

The electrode assemblies 110 may be surrounded by the separator 115. The electrode assemblies 110 may be fixed to each other by the separator 115. The separator 115 may include a solid resin separator (SRS) but is not limited thereto.

The first terminal assembly 120 may be coupled to the electrode assemblies 110. The first terminal assembly 120 may include a first insulating frame 121, a first bus bar 123, a first housing 125, first terminals 127, first bus bar blocks 128, and first gaskets 129.

The first insulating frame 121 may be adjacent to the first electrode tabs 110T1. A distance between the first insulating frame 121 and the first electrode tabs 110T1 may be different from a distance between the first insulating frame 121 and the second electrode tabs 110T2. The distance between the first insulating frame 121 and the first electrode tabs 110T1 may be less than the distance between the first insulating frame 121 and the second electrode tabs 110T2.

The first insulating frame 121 may be coupled to the first housing 125. The first insulating frame 121 may be fixed to the first housing 125 by interference fit. The first insulating frame 121 may protect the plurality of first electrode tabs 110T1. The first insulating frame 121 may include an insulating material such as polypropylene. The first insulating frame 121 fills a space around the first electrode tabs 110T1 when other elements of the battery cell 100 are wrapped with the cell case 140, thereby preventing deformation of and damage to the first electrode tabs 110T1.

The plurality of first electrode tabs 110T1 may be coupled to the first bus bar 123. The plurality of first electrode tabs 110T1 may be welded with the first bus bar 123. The first bus bar 123 may include a conductive material. The first bus bar 123 may include, for example, a metal such as aluminum.

The first bus bar 123 may include a plurality of metal layers. A thickness of each of the plurality of metal layers may be in a range of about 0.1 mm to about 0.4 mm. Each of the plurality of metal layers may include aluminum. The first bus bar 123 may be flexible and include a bent shape. The first bus bar 123 may have a corrugated structure. The first bus bar 123 may include a portion having a Z shape. The first bus bar 123 may include holes 123H, and the holes 123H may be penetrated by the first terminals 127.

The first housing 125 may include a first inner housing 125I and a first outer housing 1250. The first inner housing 125I may include a high-rigidity material. The first inner housing 125I may include, for example, a metal such as aluminum. The first outer housing 1250 may include an insulating material. The first outer housing 1250 may include, for example, a polyphthalamide resin and a thermoplastic material. The first outer housing 1250 may include polyamide, polyphenylene sulfide polyamide, polyether ether ketone, polycarbonate, polyoxymethylene, polysulfone, liquid crystal polymer, polybutylene terephthalate, or polyetherimide.

The first housing 125 may be provided by insert-injecting the first inner housing 125I. Accordingly, although FIG. 3 illustrates that the first inner housing 125I and the first outer housing 1250 are separated from each other, it is difficult to separate the first inner housing 125I and the first outer housing 1250 from each other without at least partially removing the first outer housing 1250 after the first housing 125 is provided by insert injection.

The first inner housing 125I may have an approximately hexahedral shape but may include only five faces and thus include an open space. A portion of the first insulating frame 121 may be inserted into the open space of the first inner housing 125I.

The first inner housing 125I may include a first face 125IF1, a second face 125IF2, a third face 1251F3, a fourth face 125IF4, and a fifth face 125IF5. The first face 125IF1 may be surrounded by the second face 125IF2, the third face 125IF3, the fourth face 125IF4, and the fifth face 125IF5. The second face 125IF2 and the third face 125IF3 may be opposite to each other, and the fourth face 125IF4 and the fifth face 125IF5 may be opposite to each other. A length of each of edges of the first face 125IF1 connected to the second face 125IF2 and the third face 125IF3 may be greater than a length of each of edges of the first face 125IF1 connected to the fourth face 125IF4 and the fifth face 125IF5, but embodiments are not limited thereto.

The first face 125IF1 may face the first terminals 127. The first face 125IF1 may include first holes 125IH1 penetrated by the first terminals 127. The first face 125IF1 may further include second holes 125IH2. The first holes 125IH1 and the second holes 125IH2 may be alternately formed in the first face 125IF1. The second face 125IF2 and the third face 125IF3 may include a plurality of second holes 125IH2. Although it is illustrated that the fourth face 125IF4 and the fifth face 125IF5 include one second hole 125IH2, they may include two or more second holes 125IH2.

The second holes 125IH2 may be used for insert injection. A width (or diameter) of each of the second holes 125IH2 may be different from a width (or diameter) of each of the first holes 125IH1. The width (or diameter) of each of the second holes 125IH2 may be less than the width (or diameter) of each of the first holes 125IH1. Through the second holes 125IH2, a molten resin may be uniformly applied to an entire surface of the first inner housing 125I and thus the first inner housing 125I may be embedded in the first outer housing 1250. According to embodiments, the first outer housing 1250 may include a portion between the first inner housing 125I and the first insulating frame 121 and a portion between the first inner housing 125I and the cell case 140.

The first outer housing 1250 may include holes 1250H, and the holes 1250H may be penetrated by the first terminals 127. According to embodiments, the first outer housing 1250 prevents a short circuit between the first terminals 127 and the first inner housing 125I and thus it is unnecessary to provide additional components to prevent a short circuit between the first terminals 127 and the first inner housing 125I.

Each of the first terminals 127 may include a cylindrical portion 127S and a contact portion 127C. The contact portion 127C of each of the first terminals 127 may protrude to the outside of the first housing 125, thus providing an electrical path between an external electrical element and the battery cell 100. The cylindrical portion 127S of each of the first terminals 127 may penetrate a corresponding one of the holes 123H, a corresponding one of the first holes 125IH1, and a corresponding one of the holes 1250H.

Each of the first terminals 127 may be configured to be electrically connected to the electrode assemblies 110. According to embodiments, each of the first terminals 127 may be a positive electrode terminal of the battery cell 100 but is not limited thereto. Each of the first terminals 127 may be a negative electrode terminal of the battery cell 100.

Each of the first terminals 127 may be spaced apart from the first bus bar 123 with a corresponding one of the first gaskets 129 therebetween. A corresponding one of the first bus bar blocks 128 may be coupled to the cylindrical portion 127S of each of the first terminals 127. Each of the first bus bar blocks 128 may be in contact with a corresponding of the first terminals 127 and the first bus bar 123 and thus an electrical connection may be provided between the first bus bar 123 and the first terminals 127. According to other embodiments, each of the first terminals 127 may be in direct contact with the first bus bar 123.

The first bus bar 123 may include a portion between the first bus bar blocks 128 and the first housing 125. A width of each of the first bus bar blocks 128 may be greater than a width (or diameter) of each of the holes 123H of the first bus bar 123 to prevent separation of the first bus bar 123 and the first terminals 127. The first terminals 127 may be riveted and thus the first bus bar 123, the first bus bar blocks 128, and the first terminals 127 may be fixed.

Each of the first bus bar blocks 128 may have a plate shape with a hole 128H. Each of the first bus bar blocks 128 may have a tetragonal shape. A width (or diameter) of the hole 128H of each of the first bus bar blocks 128 may be different from a width (or diameter) of each of the holes 123H of the first bus bar 123. The width (or diameter) of the hole 128H of each of the first bus bar blocks 128 may be less than the width (or diameter) of each of the holes 123H of the first bus bar 123.

A portion of the terminal 127 and a portion of a corresponding one of the first gaskets 129 may be in each of the holes 123H of the first bus bar 123. Inner circumferences of the first bus bar 123 defining the holes 123H may surround one of the first terminals 127 and one of the first gaskets 129.

The cylindrical portion 127S of a corresponding one of the first terminals 127 and a portion of a corresponding one of the first gaskets 129 may be in each of the holes 123H of the first bus bar 123. The inner circumferences of the first bus bar 123 defining the holes 123H may surround the cylindrical portion 127S of the corresponding one of the first terminals 127 and the corresponding one of the first gaskets 129.

The cylindrical portion 127S of a corresponding one of the first terminals 127 may be in the hole 128H of each of the first bus bar blocks 128. Inner circumference of each of the first bus bar blocks 128 defining the hole 128H of each of the first bus bar blocks 128 may surround the cylindrical portion 127S of the corresponding one of the first terminals 127.

The first gaskets 129 may be between the first terminals 127 and the first housing 125. The first gaskets 129 may provide insulation and a liquid seal to the first terminals 127. The first gaskets 129 may include rubber, polyethylene, polyvinyl chloride, silicon, Teflon, polyamide or fiber-reinforced plastic but are not limited thereto.

The second terminal assembly 130 may be coupled to the electrode assemblies 110. The second terminal assembly 130 may be spaced apart from the first terminal assembly with the electrode assemblies 110 therebetween. The second terminal assembly 130 may include a second insulating frame 131, a second bus bar 133, a second housing 135, second terminals 137, second bus bar blocks 138, and second gaskets 139.

The second insulating frame 131 may be adjacent to the second electrode tabs 110T2. A distance between the second insulating frame 131 and the second electrode tabs 110T2 may be different from a distance between the second insulating frame 131 and the first electrode tabs 110T1. The distance between the second insulating frame 131 and the second electrode tabs 110T2 may be less than the distance between the second insulating frame 131 and the first electrode tabs 110T1.

The second insulating frame 131 may be coupled to the second housing 135. The second insulating frame 131 may be coupled to the second housing 135 by interference fit. The second insulating frame 131 may protect the plurality of second electrode tabs 110T1. The second insulating frame 131 may include an insulating material such as polypropylene. The second insulating frame 131 fills a space around the second electrode tabs 110T2 when other elements of the battery cell 100 are wrapped with the cell case 140, thereby preventing deformation of and damage to the second electrode tabs 110T2.

The plurality of second electrode tabs 110T2 may be coupled to the second bus bar 133. The plurality of second electrode tabs 110T1 may be welded with the second bus bar 133. The second bus bar 133 may include a conductive material. The second bus bar 133 may include, for example, a metal such as copper. A thickness of the second bus bar 133 may be different from a thickness of the first bus bar 123. The thickness of the second bus bar 133 may be less than the thickness of the first bus bar 123.

A thickness of each of a plurality of metal layers of the second bus bar 133 may be different from a thickness of each of the plurality of metal layers of the first bus bar 123. The thickness of each of the plurality of metal layers of the second bus bar 133 may be less than the thickness of each of the plurality of metal layers of the first bus bar 123.

The second bus bar 133 may include a plurality of metal layers. The thickness of each of the plurality of metal layers may be in a range of about 0.1 mm to about 0.4 mm. Each of the plurality of metal layers may include aluminum. The second bus bar 133 may be flexible and may include a bent portion. The second bus bar 133 may have a corrugated structure. The second bus bar 133 may include a portion having a Z shape. The second bus bar 133 may include holes 133H, and the holes 133H may be penetrated by the second terminals 137.

The second housing 135 may include a second inner housing 135I and a second outer housing 1350. The second inner housing 135I may include a high-rigidity material. The second inner housing 135I may include, for example, a metal such as aluminum. The second outer housing 1350 may include, for example, an insulating material such as a polyphthalamide resin. The second outer housing 1350 may include polyamide, polyphenylene sulfide, polyether ether ketone, polycarbonate, polyoxymethylene, polysulfone, liquid crystal polymer, polybutylene terephthalate, or polyetherimide.

The second housing 135 may be provided by insert-injecting the second inner housing 135I. Accordingly, although FIG. 3 illustrates that the second inner housing 135I and the second outer housing 1350 are separated from each other, it is difficult to separate the second inner housing 135I and the second outer housing 1350 from each other without at least partially removing the second outer housing 1350 after the second housing 135 is provided by insert injection.

The second inner housing 135I may have an approximately hexahedral shape but may include only five faces and thus include an open space. A portion of the second insulating frame 131 may be inserted into the open space of the second inner housing 135I.

The second inner housing 135I may include a first face 135IF1, a second face 135IF2, a third face 135IF3, a fourth face 135IF4, and a fifth face 135IF5. The first face 135IF1 may be surrounded by the second face 135IF2, the third face 135IF3, the fourth face 135IF4, and the fifth face 135IF5. The second face 135IF2 and the third face 135IF3 may be opposite to each other, and the fourth face 135IF4 and the fifth face 135IF5 may be opposite to each other. A length of each of edges of the first face 135IF1 connected to the second face 135IF2 and the third face 135IF3 may be greater than a length of each of edges of the first face 135IF1 connected to the fourth face 135IF4 and the fifth face 135IF5, but embodiments are not limited thereto.

The first face 135IF1 may face the second terminals 137. The first face 135IF1 may include first holes 131IH1 penetrated by the second terminals 137. The first face 135IF1 may further include second holes 131IH2. The first holes 131IH1 and the second holes 131IH2 may be alternately formed in the first face 135IF1. The second face 135IF2 and the third face 135IF3 may include a plurality of second holes 131IH2. Although it is illustrated that the fourth face 135IF4 and the fifth face 135IF5 include one second hole 131IH2, they may include two or more second holes 131IH2.

The second holes 131IH2 may be used for insert injection. Through the second holes 131IH2, a molten resin may be uniformly applied to an entire surface of the second inner housing 135I and thus the second inner housing 135I may be embedded in the second outer housing 1350. According to embodiments, the second outer housing 1350 may include a portion between the second inner housing 135I and the second insulating frame 131 and a portion between the second inner housing 135I and the cell case 140.

The second outer housing 1350 may include holes 1350H, and the holes 1350H may be penetrated by the second terminals 137. Each of the second terminals 137 may include a cylindrical portion 137S and a contact portion 137C. The contact portion 137C of each of the second terminals 137 may protrude to the outside of the second housing 135, thus providing an electrical path between an external electrical element and the battery cell 100. The cylindrical portion 137S of each of the second terminals 137 may penetrate a corresponding one of the holes 133H, a corresponding one of the second holes 135IH1, and a corresponding one of the holes 1350H.

Each of the second terminals 137 may be configured to be electrically connected to the electrode assemblies 110. According to embodiments, each of the second terminals 137 may be a negative electrode terminal of the battery cell 100 but is not limited thereto. Each of the second terminals 137 may be a positive electrode terminal of the battery cell 100.

Each of the second terminals 137 may be spaced apart from the second bus bar 133 with a corresponding one of the second gaskets 139 therebetween. Each of the second bus bar blocks 138 may be in contact with a corresponding of the second terminals 137 and the second bus bar 133 and thus an electrical connection may be provided between the second bus bar 133 and the second terminals 137. According to other embodiments, each of the second terminals 137 may be in direct contact with the second bus bar 133.

The second bus bar 133 may include a portion between the second bus bar blocks 138 and the housing 135. A width (or diameter) of each of the second bus bar blocks 138 may be greater than a width (or diameter) of each of the holes 133H of the second bus bar 133, thereby preventing separation of the second bus bar 133 and the second terminals 137. The second terminals 137 may be riveted and thus the second bus bar 133, the second bus bar blocks 138, and the second terminals 137 may be fixed.

Each of the second bus bar blocks 138 may have a plate shape with a hole 138H. Each of the second bus bar blocks 138 may have a tetragonal shape. A width (or diameter) of the hole 138H of each of the second bus bar blocks 138 may be different from a width (or diameter) of each of the holes 133H of the second bus bar 133. The width (or diameter) of the hole 138H of each of the second bus bar blocks 138 may be less than the width (or diameter) of each of the holes 133H of the second bus bar 133.

The cylindrical portion 137S of a corresponding one of the second terminals 137 and a portion of a corresponding one of the second gaskets 139 may be in each of the holes 133H of the second bus bar 133. The inner circumferences of the second bus bar 133 defining the holes 133H may surround the cylindrical portion 137S of the corresponding one of the second terminals 137 and the corresponding one of the second gaskets 139.

The cylindrical portion 137S of a corresponding one of the second terminals 137 may be in the hole 138H of each of the second bus bar blocks 138. The inner circumference of each of the second bus bar blocks 138 defining the hole 138H of each of the second bus bar blocks 138 may surround the cylindrical portion 137S of the corresponding one of the second terminals 137.

The second gaskets 139 may be between the second terminals 137 and the second housing 135. The second gaskets 139 may provide insulation and a liquid seal to the second terminals 137. The second gaskets 139 may include rubber, polyethylene, polyvinyl chloride, silicon, Teflon, polyamide or fiber-reinforced plastic but are not limited thereto.

The cell case 140 may be a pouch case including an aluminum laminate sheet. The cell case 140 may include an inner resin layer, a metal layer, and an outer resin layer. The inner resin layer may have thermal adhesion, thus enabling sealing of the cell case 140. The inner resin layer may include, for example, a polyolefin-based material. The metal layer may include an alloy of iron, carbon, chromium and manganese, an alloy of iron, chromium and nickel, or aluminum.

The cell case 140 may surround the first outer housing 1250 and the second outer housing 1350. According to embodiments, the first outer housing 1250 and the second outer housing 1350 include a PPA resin and the like and thus may be directly thermally fused to the cell case 140. That is, additional processes, such as additional application of PPA and/or surface treatment, for thermal fusion of the first and second housings 125 and 135 and the cell case 140 may be omitted.

The cell case 140 may be in contact with each of the first outer housing 1250 of the first housing 125 and the second outer housing 1350 of the second housing 135. Furthermore, the first inner housing 125I is embedded in the first outer housing 1250 and the second inner housing 135I is embedded in the second outer housing 1350, and thus, the strength and reliability of the coupling between the housings 125 and 135 and the cell case 140 may be improved.

### (Second embodiment)

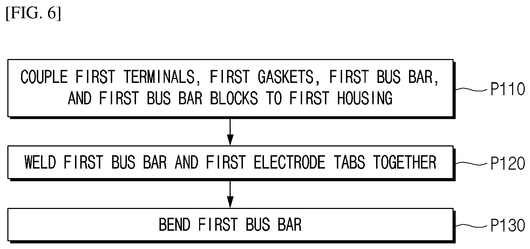

FIG. 6 is a flowchart of a manufacturing method of a battery cell according to embodiments.

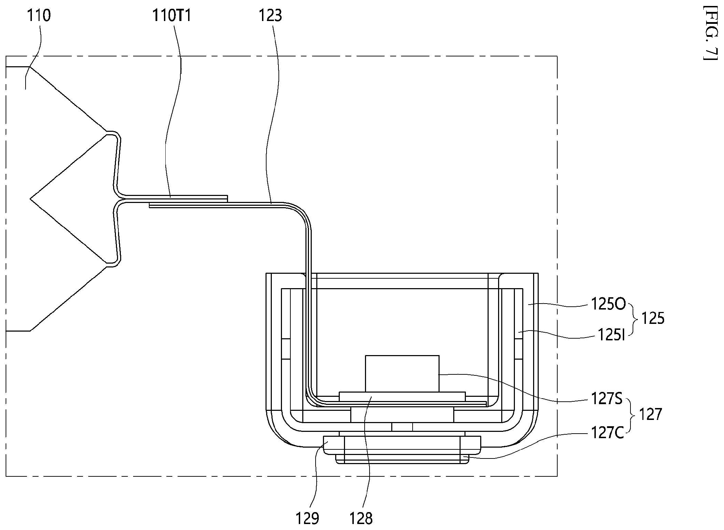

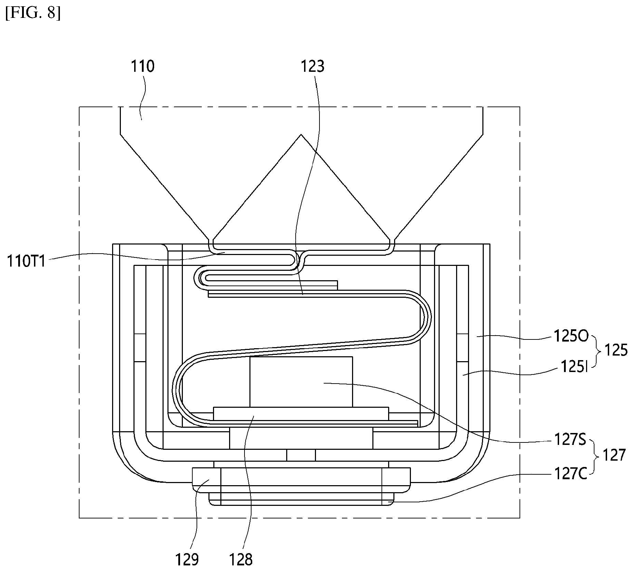

FIGS. 7 and 8 are cross-sectional views for describing a manufacturing method of a battery cell according to embodiments.

Referring to FIGS. 6 and 7, in P110, first terminals 127, first gaskets 129, a first bus bar 123, and first bus bar blocks 128 may be coupled to a first housing 125.

The first gaskets 127 and the first terminals 127 may be inserted into the first housing 125 so that cylindrical portions 127S of the first terminals 127 may penetrate the first housing 125, the first bus bar 123 may be coupled to the first terminals 127 and the first gaskets 129 so that the cylindrical portions 127S of the first terminals 127 and portions of the first gaskets 129 may be located in holes 123H of the first bus bar 123, and thereafter, the first bus bar blocks 128 may be coupled to the first terminals 127 to surround the cylindrical portions 127S of the first terminals 127. Next, through a riveting process, the first terminals 127, the first gaskets 129, the first bus bar 123, and the first bus bar blocks 128 may be fixed to the first housing 125.

Next, in P120, the first bus bar 123 and first electrode tabs 110T1 may be welded together. The first bus bar 123 and the first electrode tabs 110T1 may be coupled to each other by laser welding or ultrasonic welding.

Next, referring to FIGS. 6 and 8, in P130, the first bus bar 123 may be bent. By bending the first bus bar 123, the first bus bar 123 may have a corrugated structure and be accommodated in the first housing 125.

The electrode assemblies 110 and the first terminal assembly 120 (see FIG. 1) have been described above, and those of ordinary skill in the art will be able to easily derive the electrode assemblies 110 and the second terminal assembly 130 (see FIG. 2) based on the description herein.

### (Third Embodiment)

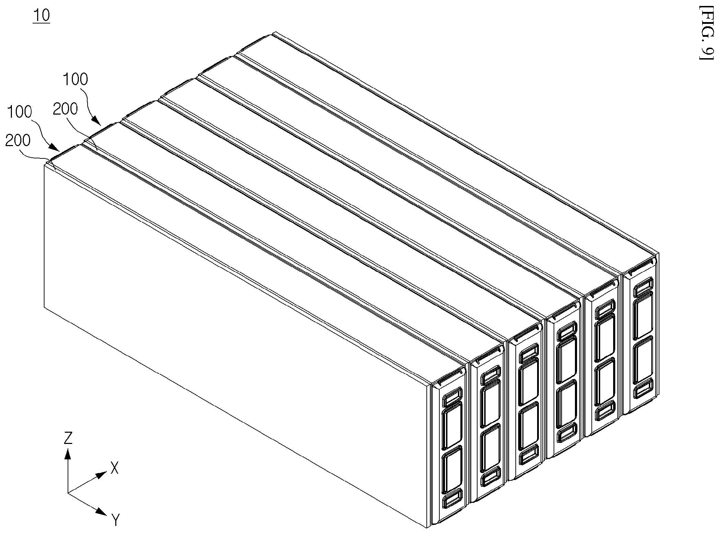

FIG. 9 is a perspective view of a battery cell assembly 10 according to embodiments.

Referring to FIGS. 1, 3 and 9, the battery cell assembly 10 may include a plurality of battery cells 100 and a plurality of pads 200.

The plurality of battery cells 100 may be arranged in the X-axis direction. First and second terminals 127 and 137 of the plurality of battery cells 100 may be spaced apart from each other in the Y-axis direction. The Z-axis direction may be spaced apart from the X-axis direction and the Y-axis direction.

According to embodiments, the plurality of pads 200 may be alternately formed with the plurality of battery cells 100 in the X-axis direction. There may be a corresponding one of the plurality of battery cells 100 between two neighboring ones of the plurality of pads 200 and there may be a corresponding one of the plurality of pads 200 between two neighboring ones of the plurality of battery cells 100.

The plurality of pads 200 may include an elastic material. The plurality of pads 200 may include, for example, polyurethane. The plurality of pads 200 may absorb swelling of the plurality of battery cells 100. The plurality of pads 200 may be thermal separators.

### (Third Embodiment)

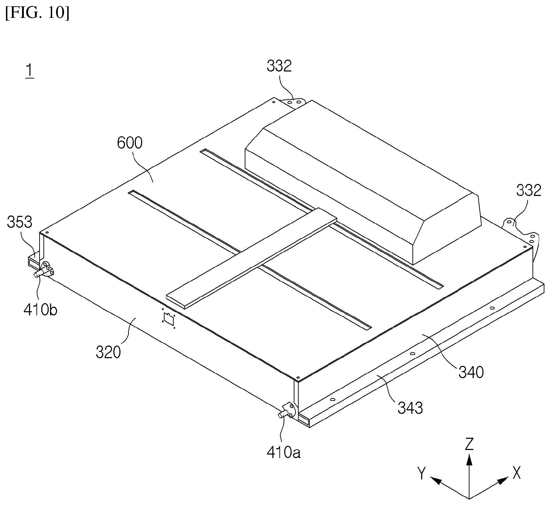

FIG. 10 is a perspective view of a battery pack 1 according to an embodiment of the present disclosure.

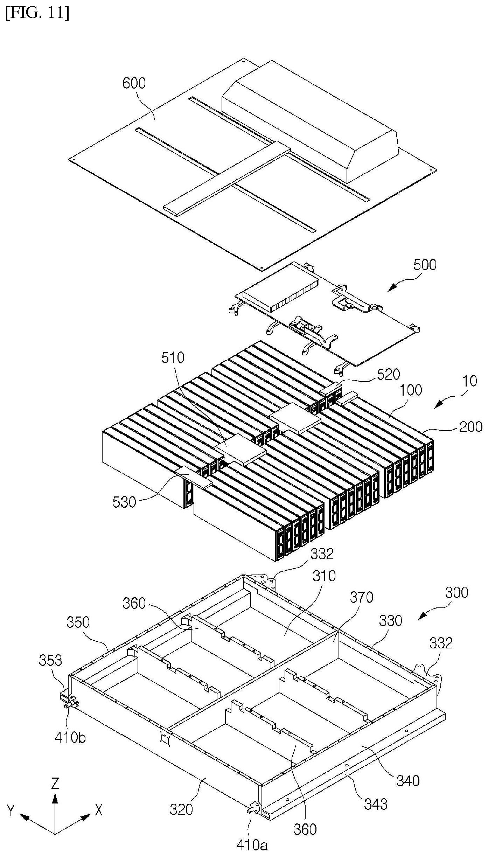

FIG. 11 is an exploded perspective view of the battery pack 1 of FIG. 10.

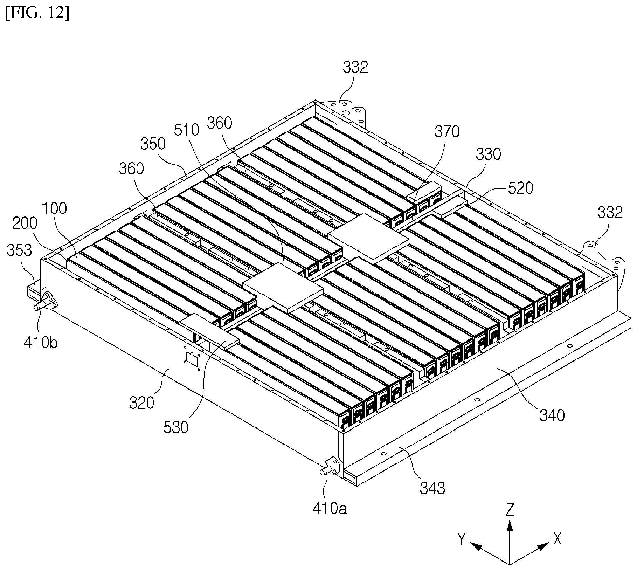

FIG. 12 is a perspective view illustrating an arrangement between elements of the battery pack 1, in which a pack cover 600 of the battery pack 1 of FIG. 10 is omitted.

Referring to FIGS. 10 to 12, the battery pack 1 according to an embodiment of the present disclosure may include a plurality of battery cell assemblies 10, a pack housing 300, cooling ports 410a and 410b, an electronic component assembly 500, first to third inter-bus bars 510, 520 and 530, and the pack cover 600.

The battery cell assemblies 10 may not be accommodated in a frame but may be loaded directly in the pack housing 300. That is, the battery pack 1 may be of a moduleless type and each of the battery cell assemblies 10 may not include a module frame but embodiments are not limited thereto. Technicians of ordinary skill in the art will be able to easily derive an embodiment in which each of the battery cell assemblies 10 includes a module frame, based on the description herein.

The electronic component assembly 500 may include a relay device, a current sensor, a fuse, a battery management system (BMS), and a manual service disconnector (MSD). The relay device may be a switching device for selectively opening or closing a charge/discharge path through which a current flows. The relay device may block the flow of charging/discharging current when an abnormal situation occurs in the battery pack 1. The BMS may be configured to control overall charging and discharging operations of the battery assemblies 10. The MSD is a system for selectively shutting off the power of a high-voltage battery by a physical method. The MSD may be configured to disconnect a service plug to shut off power as needed.

The pack housing 300 may provide a space for accommodating the battery assemblies 10 and the electronic component assembly 500. The pack housing 300 may include a material (e.g., a metal) with high rigidity against the battery cell assemblies 10 and the electronic component assembly 500 to protect the battery assemblies 10 and the electronic component assembly 500 from external impact.

The pack housing 300 of the present embodiment may include a base plate 310 of a flat plate shape, and side walls 320, 330, 340 and 350 substantially perpendicular to the base plate 310. Some side walls 330 and 340 may include mounting wings 343 and 353. The mounting wings 343 and 353 may be used to load the battery pack 1 into an application (e.g., a vehicle). Brackets 332 may be used to fix the battery pack 1 to an application (e.g., a vehicle).

Two directions substantially parallel to an upper surface of the base plate 310 are defined as an X-axis direction and a Y-axis direction. Here, the X-axis direction may be a direction in which battery cells 100 are arranged. The Y-axis direction may be substantially perpendicular to the X-axis direction. A direction substantially perpendicular to each of the X-axis direction and the Z-axis directions will be defined as a Z-axis direction.

The pack housing 300 may further include a center beam 370 and cross-beams 360 that divide a space in which the battery cell assemblies 10 are loaded. The center beam 370 and the cross-beams 360 may be on the base plate 310. The center beam 370 and the cross-beams 360 may be fixed to the base plate 310 by bolting and/or welding.

The center beam 370 may extend in the X-axis direction. The center beam 370 may isolate the battery cell assemblies 10 in the Y-axis direction. The center beam 370 may be interposed between the battery cell assemblies 10 in the Y-axis direction. The cross-beams 360 may extend in the Y-axis direction. The cross-beams 360 may be interposed between the battery cell assemblies 10 in the X-axis direction. The cross-beams 360 may isolate the battery cell assemblies 10 in the X-axis direction.

The base plate 310, the side walls 320, 330, 340 and 350, the cross-beams 360, and the center beam 370 may be provided by an extrusion process. Accordingly, the base plate 310, the side walls 320, 330, 340 and 350, the cross-beams 360, and the center beam 370 may have a constant cross section in a longitudinal direction, except for a change due to mechanical tooling.

The cooling ports 410a and 410b may be coupled to the base plate 310. The base plate 310 may include a plurality of cooling channels, and the cooling ports 410a and 410b may be configured to introduce or discharge a cooling material to or from the plurality of cooling channels.

Each of the first inter-bus bars 510 may overlap corresponding ones of the cross-beams 360 and the center beam 370 in the Z-axis direction. Each of the first inter-bus bars 510 may overlap four corresponding battery cell assemblies among the plurality of battery cell assemblies 10 in the Z-axis direction. The first inter-bus bars 510 may connect the battery cell assemblies 10, which are arranged in the X-axis direction, in series. The third inter-bus bar 530 may connect the battery cell assemblies 10, which are spaced apart from each other in the Y-axis direction, in series.

The second inter-bus bar 520 may be an output terminal for outputting a resulting voltage of the plurality of battery cell assemblies 10 connected in series by the first and third inter-bus bars 510 and 530. The second inter-bus bar 520 may be connected to wires, which are connected to an external load and a charging system, directly or through the electronic component assembly 500.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery cell comprising:
first and second electrode assemblies each including a first electrode tab and a second electrode tab; and
a first terminal assembly coupled to each of the first and second electrode assemblies,
wherein the first terminal assembly includes a first bus bar coupled to the first electrode tab of each of the first and second electrode assemblies, a first terminal coupled to the first bus bar, and a first housing with a hole penetrated by the first terminal, and
the first bus bar is flexible.

2. The battery cell of claim 1, wherein the first bus bar includes a plurality of metal layers.

3. The battery cell of claim 1, wherein a thickness of each of the plurality of metal layers is in a range of 0.1 mm to 0.4 mm.

4. The battery cell of claim 1, wherein each of the plurality of metal layers includes aluminum.

5. The battery cell of claim 1, wherein the first bus bar has a corrugated structure.

6. The battery cell of claim 1, wherein the first bus bar includes a portion having a Z-shape.

7. The battery cell of claim 1, further comprising a second terminal assembly coupled to each of the first and second electrode assemblies, and spaced apart from the first terminal assembly with the first and second electrode assemblies between the first and second terminal assemblies,
wherein the second terminal assembly includes a second bus bar coupled to the second electrode tab of each of the first and second electrode assemblies, a second terminal coupled to the second bus bar, and a second housing with a hole penetrated by the second terminal, and
the second bus bar is flexible.

8. The battery cell of claim 7, wherein the second bus bar includes a plurality of metal layers.

9. The battery pack of claim 8, wherein a thickness of each of the plurality of metal layers is in a range of 0.1 mm to 0.4 mm.

10. The battery cell of claim 8, wherein each of the plurality of metal layers includes copper.

11. The battery cell of claim 7, wherein the second bus bar has a corrugated structure.

12. The battery cell of claim 7, wherein the second bus bar includes a portion having a Z-shape.

13. The battery cell of claim 7, wherein a thickness of the second bus bar is different from a thickness of the first bus bar.

14. The battery cell of claim 7, wherein a thickness of the second bus bar is less than a thickness of the first bus bar.
